# EUROPEAN PATENT APPLICATION

(11) **EP 4 293 750 A1**
(43) Date of publication of application: **20.12.2023**
(21) Application number: 22770444.2
(22) Date of filing: 14.03.2022
(51) Int. Cl.: H01M 4/36

(54) **NEGATIVE ELECTRODE MATERIAL AND PREPARATION METHOD THEREFOR, AND ALL-SOLID-STATE LITHIUM BATTERY**

(30) Priority: 19.03.2021 CN 202110305372
(71) Applicant: BYD Company Limited, Shenzhen, Guangdong 518118 (CN)
(72) Inventor: LI, Biao, Shenzhen, Guangdong 518118 (CN); GUO, Zizhu, Shenzhen, Guangdong 518118 (CN); ZHANG, Tong, Shenzhen, Guangdong 518118 (CN); SHI, Zhuo, Shenzhen, Guangdong 518118 (CN)
(74) Representative: Arnold & Siedsma
(86) International application number: PCT/CN2022/080644
(87) International publication number: WO 2022/194089

(57) **Abstract**

The present disclosure provides a negative electrode material, a preparation method thereof, and an all-solid-state lithium battery. The negative electrode material includes a core and an amorphous lithium-silicon alloy layer cladding the core. The core includes a glassy solid electrolyte and amorphous lithium-silicon alloy particles dispersed in the glassy solid electrolyte. The material of the amorphous lithium-silicon alloy particles is LiₓSi, 0<x≤4.4. The material of the amorphou

## Description

### CROSS-REFERENCE TO RELATED APPLICATIONS

The present disclosure claims the priority to Chinese Patent Application No. 202110305372.5 filed on March 19, 2021 and entitled "NEGATIVE ELECTRODE MATERIAL, PREPARATION METHOD THEREOF, AND ALL-SOLID-STATE LITHIUM BATTERY", which is incorporated herein by reference in its entirety.

### FIELD

The present disclosure relates to the technical field of batteries, and specifically to a negative electrode material, a preparation method thereof, and an all-solid-state lithium battery.

### BACKGROUND

In recent years, all-solid-state lithium batteries using a solid electrolyte have received great attention due to their high safety. Among them, the silicon negative electrode with high theoretical specific capacity and high safety is considered as an effective approach to breakthrough in the energy density of all-solid-state lithium batteries. However, the existing silicon negative electrode materials are prone to huge volumetric changes in the process of lithium intercalation/deintercalation, which leads to the rapid decline of the capacity and decrease in the cycling performance of all-solid-state lithium batteries. Also, the poor contact between the silicon negative electrode material is unfavorable for reduction of the impedance. These limit the application of all-solid-state lithium batteries.

### SUMMARY

In view of this, the present disclosure provides a negative electrode material, a preparation method thereof, and an all-solid-state lithium battery that have good contact between the negative electrode material, slight volumetric expansion of the negative electrode material in the process of lithium intercalation/deintercalation, good cycling stability, and superior electrochemical properties, so that the all-solid-state lithium battery fabricated from this negative electrode material has the advantages of high capacity and good cycling performances, facilitating its application.

In a first aspect, the present disclosure provides a negative electrode material. The negative electrode material includes a core and an amorphous lithium-silicon alloy layer cladding the core. The core includes a glassy solid electrolyte and amorphous lithium-silicon alloy particles dispersed in the glassy solid electrolyte. The material of the amorphous lithium-silicon alloy particles is LiₓSi, 0<x≤4.4. The material of the amorphous lithium-silicon alloy layer is Li_{y}Si, 0<y≤4.4.

In some embodiments of the present disclosure, the mass ratio of the amorphous lithium-silicon alloy particles to the amorphous lithium-silicon alloy layer is (1-100): 1.

In some embodiments of the present disclosure, the mass fraction of the amorphous lithium-silicon alloy particles in the core is 50%-95%.

In some embodiments of the present disclosure, a particle size of the amorphous lithium-silicon alloy particles is 10 nm-1 µm.

In some embodiments of the present disclosure, a thickness of the amorphous lithium-silicon alloy layer is 5 nm-1 µm.

In some embodiments of the present disclosure, a particle size of the negative electrode material is 20 nm-20 µm.

In some embodiments of the present disclosure, the glassy solid electrolyte includes at least one of glassy oxide solid electrolyte and glassy sulfide solid electrolyte.

In some embodiments of the present disclosure, the glassy solid electrolyte includes in mole percent: 30mol%-80mol% of Li₂S, 10mol%-50mol% of P₂S₅, 0mol%-30mol% of SiS₂ and 0mol%-30mol% of LiA, A is at least one of Cl, Br and I.

In some embodiments of the present disclosure, the glassy solid electrolyte includes in mole percent: 30mol%-80mol% of LizO, 10mol%-50mol% of P₂O₅, 0mol%-30mol% of SiS₂ and 0mol%-30mol% of LiA, A is at least one of Cl, Br and I.

In some embodiments of the present disclosure, the glassy solid electrolyte includes in mole percent: 30mol%-80mol% of Li₂O, 20mol%-60mol% of B₂O₃ and 0mol%-30mol% of LiA, A is at least one of Cl, Br and I.

In some embodiments of the present disclosure, the glassy solid electrolyte includes in mole percent: 30mol%-80mol% of Li₂S, 20mol%-60mol% of SiS₂ and 0mol%-30mol% of LiA, where A is at least one of Cl, Br and I.

In some embodiments of the present disclosure, the glassy solid electrolyte includes in mole percent: 30mol%-85mol% of Li₂O and 15mol%-70mol% of LiA, where A is at least one of Cl, Br and I.

In the negative electrode material according to a first aspect of the present disclosure, the outermost layer is the amorphous lithium-silicon alloy layer, so that the contact performance between the negative electrode material is good, which facilitates reducing the impedance. Also, the amorphous lithium-silicon alloy particles are dispersed in the glassy solid electrolyte to serve as the core and the glassy solid electrolyte serves as the skeleton for the core to support and disperse the amorphous lithium-silicon alloy particles and buffer the volumetric expansion of the amorphous lithium-silicon alloy particles, thereby reducing the volumetric expansion effect of the negative electrode material in the process of lithium intercalation/deintercalation. Meanwhile, the amorphous lithium-silicon alloy layer secures the core to ensure sufficient mixture of and contact between the amorphous lithium-silicon alloy particles and the glassy solid electrolyte. In the negative electrode material, the amorphous lithium-silicon material and glassy solid electrolyte are adopted, which have isotropy, facilitating improving the transmission efficiency of the lithium ions and consequently improving the electrochemical properties of the negative electrode material.

In a second aspect, the present disclosure further provides a method for preparing a negative electrode material, including:
dispersing amorphous LiₓSi particles in a glassy solid electrolyte to obtain a core, 0<x≤4.4; and
cladding the core with amorphous Li_{y}Si to obtain the negative electrode material, 0<y≤4.4.

In some embodiments of the present disclosure, the cladding the core with amorphous Li_{y}Si includes: ball-milling Li_{y}Si to obtain the amorphous Li_{y}Si; and mixing and ball-milling the core and the amorphous Li_{y}Si so that the core is cladded with the amorphous Li_{y}Si.

The method for preparing a negative electrode material according to the second aspect of the present disclosure can prepare a negative electrode material described above having good contact, slight volumetric expansion in the process of lithium intercalation/deintercalation, good cycling stability, and superior electrochemical properties, and this method has a simple process that is easy to operate, making it applicable to industrial production, which is favorable for application of the negative electrode material.

In a third aspect, the present disclosure further provides an all-solid-state lithium battery including a positive electrode, a negative electrode and a solid electrolyte layer positioned between the positive electrode and the negative electrode. The negative electrode includes the negative electrode material described in the first aspect or the negative electrode material prepared by the method described in the second aspect.

In some embodiments of the present disclosure, the negative electrode includes a negative electrode current collector and a negative electrode material layer provided over the negative electrode current collector. The negative electrode material layer includes the negative electrode material.

In some embodiments of the present disclosure, the negative electrode material layer contains no conductive agent.

The all-solid-state lithium battery according to the third aspect of the present disclosure has good cycling performance and superior electrochemical properties, facilitating its application.

Additional aspects and advantages of the present disclosure will be partly presented in the description below and partly apparent from the description below or understood through practice of the present disclosure.

### BRIEF DESCRIPTION OF THE DRAWINGS

The accompanying drawings described herein are used to provide further understanding of the present disclosure, and constitute part of the present disclosure. Exemplary embodiments of the present disclosure and description thereof are used to explain the present disclosure, and do not constitute any inappropriate limitation to the present disclosure. In the accompanying drawings:
FIG. 1 is a schematic structural view of a negative electrode material according to an implementation of the present disclosure;
FIG. 2 is a schematic flowchart of a method for preparing a negative electrode material according to an embodiment of the present disclosure; and
FIG. 3 is a schematic structural view of an all-solid-state lithium battery according to an implementation of the present disclosure.

### List of numerals:

core-11, glassy solid electrolyte-111, amorphous lithium-silicon alloy particle-112, amorphous lithium-silicon alloy layer-12, negative electrode material-10, negative electrode material layer-101, negative electrode current collector-102, negative electrode-100, positive electrode material layer -201, positive electrode current collector -202, positive electrode -200, solid electrolyte layer -300.

### DETAILED DESCRIPTION

It should be noted that a person of ordinary skill in the art may make several improvements and modifications without departing from the principle of the present disclosure. All such modifications and modifications shall fall within the protection scope of the present disclosure.

Many different implementations or examples are provided in the following disclosure to implement different structures of the present disclosure. To simplify the present disclosure, components and settings in particular examples are described below. Certainly, they are merely examples and are not intended to limit the present disclosure. Moreover, although the present disclosure provides examples of various particular processes and materials, a person of ordinary skill in the art may be aware of application of another process and/or use of another material.

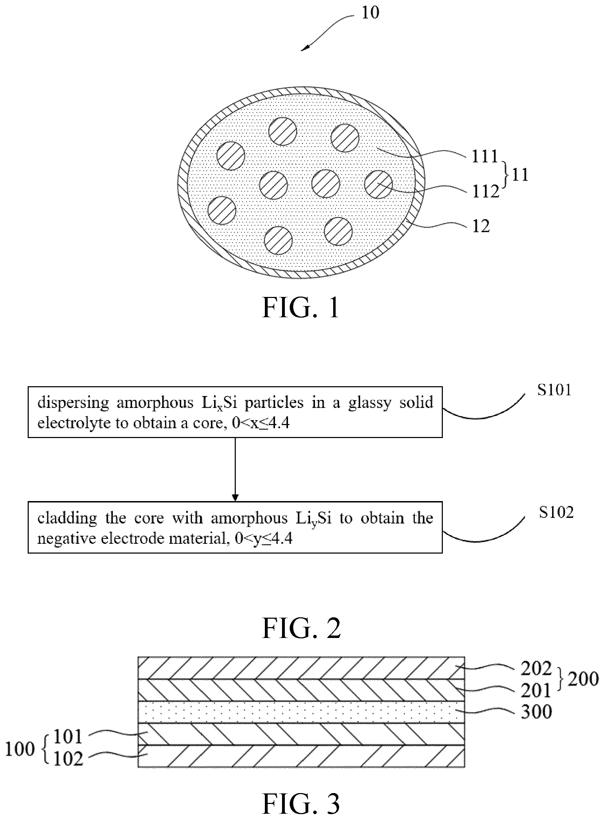

Refer to FIG.1, which shows a schematic structural view of a negative electrode material according to an implementation of the present disclosure. The negative electrode material includes a core 11 and an amorphous lithium-silicon alloy layer 12 cladding the core 11. The core 11 includes a glassy solid electrolyte 111 and amorphous lithium-silicon alloy particles 112 dispersed in the glassy solid electrolyte 111. The material of the amorphous lithium-silicon alloy particles 112 is LiₓSi, 0<x≤4.4. The material of the amorphous lithium-silicon alloy layer 12 is Li_{y}Si, 0<y≤4.4.

In the present disclosure, in the negative electrode materials 10, amorphous lithium-silicon material and glassy solid electrolyte are adopted, which are both noncrystalline and have isotropy, so that the lithium ions are not affected by the intercalation direction during deintercalation and thus rapid deintercalation is possible, which facilitates transmission of the lithium ions at the interface, improves the transmission speed and transmission distance of the lithium ions, and increases conductivity of the ions. Furthermore, compared with crystalline materials, noncrystalline materials experience less change in the internal structure in prolonged charge and discharge conditions, and have better structural stability and longer service life. In the negative electrode material 10, the amorphous lithium-silicon alloy particles 112 are dispersed in the glassy solid electrolyte 111 to serve as the core 11 and the glassy solid electrolyte 111 serves as the skeleton for the core 11 to support and disperse the amorphous lithium-silicon alloy particles 112, dealing effectively with the volumetric expansion of the amorphous lithium-silicon alloy particles 112 during cycling, thereby reducing the volumetric expansion effect of the negative electrode material 10 in the process of lithium intercalation/deintercalation and ensuring structural stability of the negative electrode material 10. The shell of the negative electrode material 10 is the amorphous lithium-silicon alloy layer 12, so that when there is contact between the negative electrode material 10, poor contact or large contact impedance due to different crystalline phases and crystalline boundaries will not occur, thereby facilitating contact intra the negative electrode material 10 and ensuring reduction of the interface impedance. Therefore, the negative electrode material 10 provided by the present disclosure has good charge and discharge performance, desirable cycling performance and superior electrochemical properties.

In the present disclosure, the glassy solid electrolyte 111 can effectively mitigate the volumetric expansion effect of the amorphous lithium-silicon alloy particles 112 and ensure the prolonged and stable use of the negative electrode material 10.

In an implementation of the present disclosure, the mass fraction of the amorphous lithium-silicon alloy particles 112 in the core 11 is 50%-95%. Further, the mass fraction of the amorphous lithium-silicon alloy particles 112 in the core 11 is 60%-90%. Still further, the mass fraction of the amorphous-state lithium-silicon alloy particles 112 in the core 11 is 70%-85%. For example, the mass fraction of the amorphous lithium-silicon alloy particles 112 in the core 11 may be, without limitation, 55%, 57%, 60%, 65%, 72%, 75%, 78%, 80%, 83%, 86% or 90% etc. By providing the amorphous lithium-silicon alloy particles 112 of the contents described above, the specific capacity of the negative electrode material 10 is ensured, which facilitates its application in all-solid-state lithium batteries.

In the present disclosure, the shape of the amorphous lithium-silicon alloy particles 112 is not limited, and it may be, without limitation, spherical, spheroid or the like. In an implementation of the present disclosure, the particle size of the amorphous lithium-silicon alloy particles 112 is 10 nm-1 µm. It can be understood that when the material is spheroid, the particle size is the equivalent particle size. Further, the particle size of the amorphous lithium-silicon alloy particles 112 is 150 nm-950 nm. Still further, the particle size of the amorphous lithium-silicon alloy particles 112 is 230 nm-870 nm. For example, the particle size of the amorphous lithium-silicon alloy particles 112 may be, without limitation, 10 nm, 80 nm, 150 nm, 200 nm, 300 nm, 500 nm, 650 nm, 700 nm, 820 nm, 900 nm or 970 nm etc. By providing the amorphous lithium-silicon alloy particles 112 of the particle sizes described above, the volumetric expansion effect of the negative electrode material 10 in the process of lithium intercalation/deintercalation can be mitigated and the electrochemical activity of the lithium ions in intercalation/deintercalation is improved.

In an implementation of the present disclosure, the mass fraction of the glassy solid electrolyte 111 in the core 11 is 5%-50%. Further, the mass fraction of the glassy solid electrolyte 111 in the core 11 is 10%-40%. Still further, the mass fraction of the glassy solid electrolyte 111 in the core 11 is 15%-30%. For example, the mass fraction of the glassy solid electrolyte 111 in the core 11 may be, without limitation, 10%, 14%, 17%, 20%, 22%, 25%, 28%, 35%, 40%, 43% or 45% etc. By providing the glassy solid electrolyte 111 of the contents described above, the content of the amorphous lithium-silicon alloy in the core 11 is ensured, intercalation/deintercalation of the lithium ions is facilitated, and the electrochemical properties of the negative electrode material 10 are improved.

In an implementation of the present disclosure, the glassy solid electrolyte 111 includes at least one of glassy oxide solid electrolyte and glassy sulfide solid electrolyte. By providing the glassy solid electrolyte 111 described above, transmission of the lithium ions is facilitated. In an embodiment, the glassy solid electrolyte 111 includes in mole percent: 30mol%-80mol% of Li₂S, 10mol%-50mol% of P₂S₅, 0mol%-30mol% of SiS₂ and 0mol%-30mol% of LiA, A is at least one of Cl, Br and I. For example, the glassy solid electrolyte 111 may include in mole percent, without limitation, 65mol% of Li₂S, 20mol% of P₂S₅, 5mol% of SiS₂ and 10mol% of LiA. In another embodiment, the glassy solid electrolyte 111 includes in mole percent: 30mol%-80mol% of Li₂O, 10mol%-50mol% of P₂O₅, 0mol%-30mol% of SiS₂ and 0mol%-30mol% of LiA, A is at least one of Cl, Br and I. For example, the glassy solid electrolyte 111 may include in mole percent, without limitation, 50mol% of Li₂O, 35mol% of PzOs, 10mol% of SiS₂ and 5mol% of LiA. In another embodiment, the glassy solid electrolyte 111 includes in mole percent: 30mol%-80mol% of Li₂O, 20mol%-60mol% of B₂O₃ and 0mol%-30mol% of LiA, A is at least one of Cl, Br and I. For example, the glassy solid electrolyte 111 may include in mole percent, without limitation, 70mol% of Li₂O, 25mol% of B₂O₃ and 5mol% of LiA. In another embodiment, the glassy solid electrolyte 111 includes in mole percent: 30mol%-80mol% of Li₂S, 20mol%-60mol% of SiS₂ and 0mol%-30mol% of LiA, A is at least one of Cl, Br and I. For example, the glassy solid electrolyte 111 may include in mole percent, without limitation, 55mol% of Li₂S, 25mol% of SiS₂ and 20mol% of LiA. In another embodiment, the glassy solid electrolyte 111 includes in mole percent: 30mol%-85mol% of Li₂O and 15mol%-70mol% of LiA, A is at least one of Cl, Br and I. For example, the glassy solid electrolyte 111 may include in mole percent, without limitation, 70mol% of Li₂O and 30mol% of LiA.

In the present disclosure, by providing the amorphous lithium-silicon alloy layer 12, the contact performance intra the negative electrode material 10 is improved, which facilitates reducing the impedance of the negative electrode material 10. For the material (LiₓSi) of the amorphous lithium-silicon alloy particles 112 and the material (Li_{y}Si) of the amorphous lithium-silicon alloy layer 12, the values of x and y may be assumed to be the same or different. In an embodiment of the present disclosure, 2<x≤4.4 and 2<y≤4.4. For example, x and y are independently selected from 1.71, 2.33, 3.25, 3.75 or 4.4 etc.

In an implementation of the present disclosure, the thickness of the amorphous lithium-silicon alloy layer 12 is 5 nm-1 µm. Further, the thickness of the amorphous lithium-silicon alloy layer 12 is 60 nm-950 nm. Still further, the thickness of the amorphous lithium-silicon alloy layer 12 is 150 nm-820 nm. For example, the thickness of the amorphous lithium-silicon alloy layer 12 may be, without limitation, 10 nm, 80 nm, 150 nm, 200 nm, 300 nm, 500 nm, 650 nm, 700 nm, 820 nm, 900 nm or 970 nm. By providing the amorphous lithium-silicon alloy layer 12 of the thicknesses described above, the amorphous lithium-silicon alloy layer 12 has a relatively small thickness, and the amorphous lithium-silicon alloy layer 12 mainly serves to secure and protect the core 11, and improves the contact performance intra the negative electrode material 10 as well.

In an implementation of the present disclosure, the ratio of the radius of the core 11 to the thickness of the amorphous lithium-silicon alloy layer 12 is 2-9. Further, the ratio of the radius of the core 11 to the thickness of the amorphous lithium-silicon alloy layer 12 is 3-8. Still further, the ratio of the radius of the core 11 to the thickness of the amorphous-state lithium-silicon alloy layer 12 is 4-7.5. For example, the ratio of the radius of the core 11 to the thickness of the amorphous lithium-silicon alloy layer 12 may be, without limitation, 2, 2.5, 4, 4.5, 5, 5.8, 6, 6.5, 7, 7.2 or 8.5 etc, thereby facilitating increasing the content of the core 11, improving transmission of the lithium ions, and increasing the specific capacity of the negative electrode material 10.

In an implementation of the present disclosure, the mass ratio of the amorphous lithium-silicon alloy particles 112 to the amorphous lithium-silicon alloy layer 12 is (1-100): 1. Further, the mass ratio of the amorphous lithium-silicon alloy particles 112 to the amorphous lithium-silicon alloy layer 12 is (10-95): 1. Still further, the mass ratio of the amorphous lithium-silicon alloy particles 112 to the amorphous lithium-silicon alloy layer 12 is (20-80): 1, (25-80): 1, (30-70): 1, (25-70): 1 or (30-65): 1 etc. For example, the mass ratio of the amorphous lithium-silicon alloy particles 112 to the amorphous lithium-silicon alloy layer 12 may be, without limitation, 15: 1, 20: 1, 25: 1, 30: 1, 40: 1, 45: 1, 50: 1, 55: 1, 60: 1, 70: 1, 80: 1, 90: 1 or 95: 1 etc., so that the amorphous lithium-silicon alloy particles 112 mainly serve to intercalate/deintercalate the lithium ions, and the amorphous lithium-silicon alloy layer 12 serves to protect and secure the core 11 and facilitates improvement of the transmission effect of the lithium ions.

In an implementation of the present disclosure, the particle size of the negative electrode material 10 is 20 nm-20 µm. Further, the particle size of the negative electrode material 10 is 100 nm-19 µm. Still further, the particle size of the negative electrode material 10 is 0.5 µm-18 µm, 1 µm-17 µm, 2 µm-16 µm, 3 µm-15 µm, 5 µm-13 µm or 7 µm-12 µm etc. For example, the particle size of the negative electrode material 10 may be, without limitation, 50 nm, 1.5 µm, 2.8 µm, 4.5 µm, 8 µm, 10 µm, 12.5 µm, 14 µm, 16 µm or 18 µm etc.

In an implementation of the present disclosure, the ion conductivity of the negative electrode material 10 at the room temperature is more than 10⁻⁷S·cm⁻¹, the room temperature being 15°C-30°C.

In an implementation of the present disclosure, the electron conductivity of the negative electrode material 10 at the room temperature is more than 10⁻²S·cm⁻¹, the room temperature being 15°C-30°C.

Refer to FIG. 2, which is a schematic flowchart of a method for preparing a negative electrode material according to an implementation of the present disclosure. The method includes the following steps.

S101: Dispersing amorphous LiₓSi particles in the glassy solid electrolyte to obtain a core, 0<x≤4.4.

S102: Cladding the core with amorphous Li_{y}Si to obtain the negative electrode material, 0<y≤4.4.

In the present disclosure, noncrystalline raw materials may be directly provided for mixture, or noncrystalline raw materials may be obtained by means of ball milling. In an implementation of the present disclosure, the dispersing the amorphous LiₓSi particles in the glassy solid electrolyte includes simply mixing the amorphous LiₓSi particles with the glassy solid electrolyte uniformly. In another implementation of the present disclosure, the dispersing the amorphous LiₓSi particles in the glassy solid electrolyte includes mixing the LiₓSi particles with the solid electrolyte and after ball-milling mixture, obtaining the amorphous LiₓSi particles and the glassy solid electrolyte, with the amorphous LiₓSi particles being dispersed in the glassy solid electrolyte. Further, the ball-milling mixture is done at a rotational speed of 150rpm-350rpm for a processing time of 1h-5h. Still further, the ball-milling mixture is done at a rotational speed of 200rpm-300rpm for a processing time of 2h-4h. Noncrystalline raw materials can be obtained through prolonged ball-milling at a high rotational speed. The contact performance intra the glassy solid electrolyte and the contact performance between the glassy solid electrolyte and the amorphous LiₓSi are good, which facilitates reducing the impedance and increasing the ion conductivity. In another implementation of the present disclosure, the amorphous LiₓSi particles are dispersed in the glassy solid electrolyte and are subjected to heat treatment. The interface compatibility between the amorphous LiₓSi particles and the glassy solid electrolyte is improved by heat treatment, further improving the contact performance. In an embodiment, the heat treatment includes increasing the temperature to 250°C-400°C at a rate above 10°C/min and maintaining this temperature for 10min-60min. For example, the heat treatment may include, without limitation, increasing the temperature to 300°C at a rate above 10°C/min and maintaining this temperature for 30min.

In an implementation of the present disclosure, the cladding the core 11 with the amorphous Li_{y}Si includes: ball-milling the Li_{y}Si to obtain the amorphous Li_{y}Si, then ball-milling and mixing the core 11 with the amorphous Li_{y}Si so that the core 11 is cladded with the amorphous Li_{y}Si. In an embodiment of the present disclosure, the specific approach of ball-milling may be wet ball-milling or dry ball-milling. In an implementation of the present disclosure, the solvent used in wet ball-milling may be, without limitation, at least one of toluene, xylene, anisole, heptane, decane, ethyl acetate, ethyl propionate, butyl butyrate, N-methylpyrrolidone and acetone etc. In another implementation of the present disclosure, ball milling is done at a rotational speed of 50rpm-250rpm for 5 min-30 min. Further, ball-milling is done at a rotational speed of 150rpm-250rpm for 20 min- 30 min.

In an implementation of the present disclosure, preparation of the negative electrode material 10 is done in the presence of a protective gas. For example, the protective gas includes at least one of nitrogen, helium, hydrogen or the like.

The relevant parameters and effects of the negative electrode material 10 prepared by the preparation method of the present disclosure have been described above and shall not be described here again.

The method for preparing a negative electrode material 10 according to the present disclosure can prepare a negative electrode material described above having good contact, slight volumetric expansion in the process of lithium intercalation/deintercalation, good cycling stability, and superior electrochemical properties, and this method has a simple process that is easy to operate, making it applicable to industrial production, which is favorable for application of the negative electrode material.

Refer to FIG. 3, which is a schematic structural view of an all-solid-state lithium battery according to an implementation of the present disclosure. The all-solid-state lithium battery includes a positive electrode 200, a negative electrode 100 and a solid electrolyte layer 300 positioned between the positive electrode 200 and the negative electrode 100. The negative electrode 100 includes the negative electrode material 10 according to any one of the implementations described above.

In an implementation of the present disclosure, the negative electrode 100 includes a negative electrode current collector 102 and a negative electrode material layer 101 provided over the negative electrode current collector 102. The negative electrode material layer 101 includes the negative electrode material 10. In an implementation of the present disclosure, the thickness of the negative electrode material layer 101 may be, without limitation, 5 µm-50 µm.

In an implementation of the present disclosure, the negative electrode material layer 101 contains no conductive agent. As such, the negative electrode material layer 101 can contain the negative electrode material 10 in a greater content and with electrochemical activity, enabling greater capacity of the negative electrode 100 and higher power density of the all-solid-state lithium battery.

In an implementation of the present disclosure, the negative electrode material layer 101 further includes at least one of the binders. The binder assists in fixing the negative electrode material layer 101 securely to the negative electrode current collector 102 and gives the negative electrode material layer 101 certain elasticity. In an embodiment of the present disclosure, the binder may include without limitation at least one of polythiophene, polypyrrole, polytetrafluoroethylene, polyvinylidene fluoride, polyethylene, polypropylene, polystyrene, polyacrylamide, ethylene-propylene-diene copolymer resin, styrene-butadiene rubber, polybutadiene, fluororubber, polyvinylpyrrolidone, polyester resin, acrylic resin, phenolic resin, epoxy resin, polyvinyl alcohol, hydroxypropyl cellulose, ethyl cellulose, polyethylene oxide, sodium carboxymethyl cellulose and styrene-butadiene rubber. In another embodiment of the present disclosure, the content of the binder in the negative electrode material layer 101 is 0.5wt%-5wt%. In an embodiment of the present disclosure, the content of the binder in the negative electrode material layer 101 may be, without limitation, 1wt%-5wt%, 1.5wt%-4.5wt%, 2wt%-4wt% or 2.5wt%-3.8wt% etc.

In an implementation of the present disclosure, the positive electrode 200 may include a positive electrode current collector 202 and a positive electrode material layer 201 provided over the positive electrode current collector 202. The positive electrode material layer 201 may include a positive electrode active material, a conductive agent, a solid electrolyte material for positive electrode and a binder for positive electrode .

In an implementation of the present disclosure, the positive electrode active material includes one or more of oxide-based, sulfide-based, polyanion-based materials and compounds of these materials. In an embodiment of the present disclosure, the oxide-based positive electrode active material may include, without limitation, at least one of : TiO₂, Cr₃O₈, V₂O₅, MnO₂, NiO, WO₃, LiMn₂O₄, LizCuOz, LiCoₘNi₁₋ₘO₂(0≤m≤1), LiCoₐNi_{1-a-b}Al_{b}O₂(0≤a≤1 and 0≤b≤1), LiFe_{c}Mn_{d}GₑO₄ (G selected from a group consisting of at least one of Al, Mg, Ga, Cr, Co, Ni, Cu, Zn and Mo, with 0≤c≤1,0≤d≤1,0≤e≤1 and c+d+e=1), Li_{1+f}L_{1-g-h}H_{g}RₕO₂(L, Hand R independently selected from a group consisting of at least one of Li, Co, Mn, Ni, Fe, Al, Mg, Ga, Ti, Cr, Cu, Zn, Mo, F, I, S and B; L, H and R being elements different from each other, with - 0.1≤f≤0.2, 0≤g≤1, 0≤h≤1 and 0≤g+h≤1) or the like. In an embodiment of the present disclosure, the oxide-based positive electrode active material may include, without limitation, one or more of LiCoO₂, LiNiO₂ and LiMn₂O₄. In another embodiment of the present disclosure, the sulfide-based positive electrode active material may include, without limitation, at least one of TiS₂, V₂S₃, FeS, FeS₂, WS₂, LiJSᵢ (J selected from a group consisting of at least one of Ti, Fe, Ni, Cu and Mo, with 1≤i≤2.5) or the like. In another embodiment of the present disclosure, the polyanion-based positive electrode active material may include, without limitation, at least one of LiFePO₄, Li₃V₂(PO₄)₃, Li₃V₃(PO₄)₃ and LiVPO₄F.

In an implementation of the present disclosure, the particle size of the positive electrode active material is 100 nm-500 µm. In an embodiment of the present disclosure, the particle size of the positive electrode active material may be, without limitation, 100 nm-100 µm, 100 nm-50 µm or 500 nm-50 µm etc.

In an implementation of the present disclosure, the surface of the positive electrode active material may further carry a cladding layer to optimize the interface between the positive electrode material layer 201 and the solid electrolyte, reduce the interface impedance and improve the cycling stability. In an embodiment of the present disclosure, the cladding layer over the positive electrode active material may include, without limitation, LiNbO₃, LiTaO₃, Li₃PO₄, and Li₄Ti₅O₁₂ etc.

In the present disclosure, there is no particular limitation with respect to the binder for positive electrode in the positive electrode material layer 201. The binder, for example, may include, without limitation, at least one of fluorine-containing resin, polyvinylidene fluoride, polytetrafluoroethylene, polyvinyl alcohol, polyolefin, styrene-butadiene rubber, etc. There is no particular limitation with respect to the conductive agent in the positive electrode material layer 201. Any conventional material in the art may be utilized as the conductive agent. For example, the conductive agent may include, without limitation, at least one of conductive carbon black (e.g., acetylene black or Ketjen black), carbon nanotubes, carbon fibers and graphite. In an embodiment of the present disclosure, the content of the binder for positive electrode in the positive electrode material layer 201 is 0.01wt%-10wt%. For example, the content of the binder for positive electrode in the positive electrode material layer 201 may be, without limitation, 0.015wt%-8wt%, 0.02wt%-7wt%, 0.02wt%-5wt% or 0.05wt%-4.5wt% etc. In another embodiment of the present disclosure, the content of the conductive agent in the positive electrode material layer 201 is 0.1wt%-20wt%. For example, the content of the conductive agent in the positive electrode material layer 201 may be, without limitation, 0.5wt%-18wt%, 1wt%-15wt%, 1wt%-10wt% or 3wt%-8.5wt% etc.

In an implementation of the present disclosure, the negative electrode current collector 102 and the positive electrode current collector 202 described above are selected independently from metal foil or alloy foil. The metal foil includes, without limitation, copper, titanium, aluminum, platinum, iridium, ruthenium, nickel, tungsten, tantalum, gold or silver foil, and the alloy foil includes, without limitation, stainless steel or an alloy containing at least one element of copper, titanium, aluminum, platinum, iridium, ruthenium, nickel, tungsten, tantalum, gold and silver. For example, the negative electrode current collector 102 may be aluminum foil, and the positive electrode current collector 202 may be copper foil. In the present disclosure, the thickness and surface roughness of the negative electrode current collector 102 and the positive electrode current collector 202 may be adjusted based on actual demands.

In an implementation of the present disclosure, the solid electrolyte layer 300 may be coated with a paste containing a solid electrolyte material and a solvent and be dried. The composition of the solid electrolyte layer 300 includes a solid electrolyte material. In another implementation of the present disclosure, the solid electrolyte layer 300 may further contain a binder that may be of a material selected from the binders in the positive electrode material layer 201 described above, which shall not be described again here. In an embodiment of the present disclosure, the solid electrolyte layer 300 may be combined with the negative electrode material layer 101 by means of coating. Then the solid electrolyte layer 300 is further combined with the positive electrode 200 carrying the positive electrode material layer 201 by means of pressing.

In an implementation of the present disclosure, the solid electrolyte material for positive electrode and the solid electrolyte material in the solid electrolyte layer 300 are independently selected from a group consisting of one or more of sodium superionic conductor (NASICON) solid electrolyte, garnet-based solid electrolyte, perovskite-based solid electrolyte and sulfur-based solid electrolyte. The material of the solid electrolyte layer 300 is the same as or different from the material of the solid electrolyte for positive electrode. For example, a reductionresistant solid electrolyte material is selected as the composition of the solid electrolyte layer in order to protect the negative electrode material 10 of the negative electrode 100 to further improve the cycling stability of the negative electrode material 10. Further, the particle size of the solid electrolyte material utilized in preparing the solid electrolyte layer 300 and the positive electrode material layer 201 may be 1 nm-5 µm. In an embodiment of the present disclosure, the NASICON type solid electrolyte may include, without limitation, LiM₂(PO₄)₃ and dopants thereof, where M is Ti, Zr, Ge, Sn or Pb. The doping element used for the dopant is selected from a group consisting of one or more of Mg, Ca, Sr, Ba, Sc, Al, Ga, In, Nb, Ta and V. In another embodiment of the present disclosure, the chemical formula of the garnet-based solid electrolyte is Li_{7+p-q-3u}AlᵤLa₃₋ₚXₚZr_{2-q}Y_{q}O₁₂, with 0<p≤1,0<q≤1 and 0<u≤1, X is selected from a group consisting of at least one of La, Ca, Sr, Ba and K and Y is selected from a group consisting of at least one of Ta, Nb, W and Hf. In another embodiment of the present disclosure, the chemical formula of the perovskite-based solid electrolyte is A¹ₓ₁B¹_{y1}TiO₃, A¹ₓ₂B²_{y2}Ta₂O₆, A³ₓ₃B³_{y3}Nb₂O₆ or A_{c}E_{d}DₑTi_{f}O₃, with x1+3y1=2, 0<x1<2, and 0<y1<2/3; x2+3y2=2, 0<x2<2 and 0<y2<2/3; x3+3y3=2, 0<x3<2 and 0<y3<2/3; c+2d+5e+4f=6, c, d, e, f all being greater than 0; A¹, A² and A³ are independently selected from a group consisting of at least one of Li and Na, B', B² and B³ are independently selected from a group consisting of at least one of La, Ce, Pr, Y, Sc, Nd, Sm, Eu and Gd, E is selected from a group consisting of at least one of Sr, Ca, Ba, Ir and Pt, and D is selected from a group consisting of at least one of Nb and Ta. In another embodiment of the present disclosure, the sulfide solid electrolyte includes, without limitation, one or more of crystalline LiᵣQₛPₜ₁S_{z}, glassy Li₂S-P₂S₅ and glassceramic Li₂S-P₂S₅ and a dopant thereof. For the crystalline LiᵣQₛPₜ₁S_{z}, Q is selected from a group consisting of one or more of Si, Ge and Sn, with r+4s+5t1=2z and 0≤s≤1.5. The glassy Li₂S-P₂S₅ includes various products comprised by Li₂S and P₂S₅, including, for example, Li₇P₃S₁₁ or 70Li₂S-30P₂S₅ etc.

In an implementation of the present disclosure, a method for preparing an all-solid-state lithium battery is further provided, including the following steps.

S201: A negative electrode 100 is prepared as follows. The negative electrode material 10 is mixed with a first solvent to obtain a mixed paste of negative electrode. The mixed paste of negative electrode is coated over the negative electrode current collector 102 and dried and pressed to obtain the negative electrode 100.

S202: The solid electrolyte layer 300 is prepared as follows. In the presence of a protective gas, the solid electrolyte material is mixed uniformly with a second solvent to obtain the mixed paste for solid electrolyte. The mixed paste for solid electrolyte is continuously coated over the negative electrode and dried to form a solid electrolyte layer 300 over the negative electrode 100.

S203: The positive electrode 200 is prepared as follows. The positive electrode active material, the solid electrolyte for positive electrode, the conductive agent, the binder for positive electrode and a third solvent are mixed uniformly to obtain the mixed paste of positive electrode. The mixed paste of positive electrode is coated over the positive electrode current collector 202 and is dried and tablet-pressed to obtain the positive electrode 200.

S204: In the presence of a protective gas, the negative electrode 100 carrying the solid electrolyte layer 300 is aligned with the prepared positive electrode 200 and adhered to the tab, and goes through processings of hog-pressing, vacuum sealing and isostatic pressing to obtain the all-solid-state lithium battery.

In an implementation of the present disclosure, the first solvent, the second solvent and the third solvent are independently selected from a group consisting of at least one of water, ethanol, toluene, xylene, anisole, acetonitrile, heptane, decane, ethyl acetate, ethyl propionate, butyl butyrate, N- methylpyrrolidone, acetone etc. The amount of the solvents used may generally be 50wt%-400wt% of the weight of the dry materials used in formulating the corresponding mixed paste.

In an implementation of the present disclosure, the tablet-pressing may include roller pressing at, without limitation, 0-5 MPa.

In an implementation of the present disclosure, the temperature of the hot-pressing may be, without limitation, about 100°C, and the processing time of the hot-pressing may be, without limitation, 0.5h-3h; the intensity of pressure of the isostatic pressing may be, without limitation, above 100 MPa, e.g., the intensity of pressure is 100 Mpa-300 MPa; and the processing time of the isostatic pressing may be, without limitation, 3 min-10 min.

As the all-solid-state lithium battery provided by the present disclosure includes the negative electrode material 10 described above, this all-solid-state lithium battery has high capacity and good cycling performance, facilitating its application.

The embodiments of the disclosure are further described separately in the following.

### Embodiment 1

A method for preparing an all-solid-state lithium battery includes the following steps.

### (1) Fabrication of the negative electrode plate

In an argon atmosphere, 31g of Li₂S, 60g of P₂S₅, 7g of SiS₂, 2g of P₂O₅, and 1000g of Li_{2.3}Si are jointly placed in the mill tank. A suitable amount of ZrO₂ mill beads is added. After high-energy ball milling at a rotational speed of 200rpm for 2h, the materials are transferred to an electric furnace (in a protective atmosphere) to be heated up to 300°C at a heat-up temperature no lower than 10°C/min and are maintained at the temperature for 30 min to obtain a core. The core includes glassy solid electrolyte made up of Li₂S, P₂S₅, SiS₂ and P₂O₅ and amorphous Li_{2.3}Si particles dispersed therein.

1000g of Li_{1.71}Si is placed in the mill tank. A suitable amount of ZrO₂ mill beads is added. High-energy ball billing is performed at a rotational speed of 250rpm for 0.5h to obtain an amorphous Li_{1.71}Si alloy. 1000g of core, 50g of amorphous Li_{1.71}Si alloy and 1000g of toluene solvent are jointly placed in the mill tank. A suitable amount of ZrO₂ mill beads is added. Ball milling is performed at a speed of 50rpm for 30 min to obtain a negative electrode material which is a core cladded with amorphous Li_{1.71}Si alloy layer. Through focused ion beam cutting (FIB) of particle samples and observation with a scanning electron microscope (SEM), it is found that the average particle size of the amorphous Li_{2.3}Si particles is about 50 nm, the average thickness of the amorphous Li_{1.71}Si alloy layer is about 250 nm and the overall average particle size of the negative electrode particles is about 1 µm.

1000g of the negative electrode material, 30g of binder SBR rubber, and 1500mL of toluene solution are jointly placed in a dispersion machine and are dispersed for 30 min to form a negative electrode paste that is stable and uniform. The negative electrode paste is coated uniformly and discontinuously over the copper foil (of a width of 160 mm and of a thickness of 16 µm) and dried at 373K and then tablet-pressed by a roller press to obtain the negative electrode.

### (2) Fabrication of the solid electrolyte layer

In the argon atmosphere, 600g of 70Li₂S•30P₂S₅ glassy solid electrolyte material is placed in 1200g of toluene solution containing 30g of butadiene rubber binder and is heated and stirred to obtain a paste that is stable and uniform. This paste is continuously coated over the negative electrode obtained from the step (1) and then dried at 373K to form a solid electrolyte layer of a thickness of 50 µm over the negative electrode.

### (3) Fabrication of the positive electrode

1000g of LiCoO₂, 51mL of niobium ethoxide, 12g of lithium ethoxide, 1000mL of deionized water and 1000mL of ethanol are sufficiently mixed. During continuous stirring, ammonia drops are added to regulate the pH to 10. The solution is dried by distillation. The resultant powder is heated at 400°C for 8h to obtain a LiCoOz positive electrode active material, the surface of which is cladded with LiNbO₃.

1000g of LiCoOz positive electrode active material cladded with LiNbO₃ as described above, 150g of Li₁₀GeP₂S₁₂ solid electrolyte material, 30g of butadiene rubber binder, 20g of acetylene black, 20g of carbon fiber are added to 1500g of toluene solvent, then stirred in a vacuum stirrer to form a mixed paste of positive electrode that is stable and uniform. The mixed paste of positive electrode is coated uniformly and discontinuously over an aluminum foil (of a width of 160 mm and a thickness of 16 µm), dried at 393K, tablet-pressed by a roller press to form a positive electrode material layer of a thickness of 100 µm over the aluminum foil and obtain a positive electrode.

### (4) Fabrication of all-solid-state lithium battery

In the protective atmosphere, the positive electrode described above is aligned with the negative electrode carrying the solid electrolyte layer and placed in a tablet press, adhered to the tab and hot-pressed at 100°C for 1h, then sealed by being vacuumized with an aluminumplastic film, and thereafter, it is finally pressed at 200Mpa for 300s in an isostatic press to obtain the all-solid-state lithium battery.

### Embodiment 2

A method for preparing an all-solid-state lithium battery is provided, which is substantially the same as the embodiment 1 except that Li_{2.3}Si is replaced by Li_{4.4}Si, Li_{1.71}Si is replaced by Li_{3.75}Si, and the LiCoO₂ positive electrode active material cladded with LiNbO₃ is replaced by TiS₂. Through focused ion beam cutting (FIB) of particle samples and observation with a scanning electron microscope (SEM), it is found that the average particle size of the amorphous Li_{4.4}Si particles is about 75 nm, the average thickness of the amorphous Li_{3.75}Si alloy layer is about 350 nm and the overall average particle size of the negative electrode particles is about 1.3 µm.

### Embodiment 3

A method for preparing an all-solid-state lithium battery is provided, which is substantially the same as the embodiment 1 except for the differences as follows. 12.4g of Li₂S, 24g of P₂S₅, 2.8g of SiS₂, 0.8g of P₂O₅ and 1000g of Li_{2.3}Si are jointly placed in the mill tank. A suitable amount of ZrO₂ mill beads is added. After high-energy ball milling at a rotational speed of 150rpm for 0.3h, the materials are transferred to an electric furnace (in a protective atmosphere) to be heated up to 300°C at a heat-up temperature no lower than 10°C/min and are maintained at the temperature for 30min to obtain a core. The rest steps are the same. Through focused ion beam cutting (FIB) of particle samples and observation with a scanning electron microscope (SEM), it is found that the average particle size of the amorphous Li_{2.3}Si particles is about 1.2 µm, the average thickness of the amorphous Li_{1.71}Si alloy layer is about 5 µm and the overall average particle size of the negative electrode particles is about 30 µm.

To highlight the beneficial effects of the embodiments of the present disclosure, the following comparative examples are presented.

### Comparative Example 1

A method for preparing an all-solid-state lithium battery is provided. This method is different from the embodiment 1 in that the negative electrode material is replaced by a silicon negative electrode material cladded with carbon. The method for preparing the silicon negative electrode material cladded with carbon includes the following steps. 1000g of Si and 240g of sucrose are jointly placed in 1000mL of deionized water and are uniformly stirred while being heated to 100°C during stirring. After evaporation of water, solids are taken out and heated to 300°C in an inert atmosphere to obtain a silicon negative electrode material cladded with carbon which may be directly utilized as the negative electrode. The rest steps are the same.

### Comparative Example 2

A method for preparing an all-solid-state lithium battery is provided. This method is different from the embodiment 1 in that the step (1) includes the specific operations as follows. 1000g of Si and 240g of sucrose are jointly placed in 1000mL of deionized water and are uniformly stirred while being heated to 100°C during stirring. After evaporation of water, solids are taken out and heated to 300°C in an inert atmosphere to obtain a silicon negative electrode material cladded with carbon. 1000g of the silicon negative electrode material cladded with carbon and 150g of 70Li₂S•30P₂S₅ glassy electrolyte material, 100g of acetylene black, and 1500mL of toluene are formulated into a mixed paste which is coated over a copper foil. The materials are dried and tablet-pressed to obtain a negative electrode. The rest steps are the same.

### Comparative Example 3

A method for preparing an all-solid-state lithium battery is provided. This method is different from the embodiment 1 in that in the step (1), 1000g of core and 50g of amorphous Li1.71Si are directly mixed with 30g of binder SBR rubber and 1500mL of toluene solution to obtain a negative electrode paste. No cladding is done between the 950g of core and the 50g of amorphous Li1.71Si. The rest steps are the same.

### Comparative Example 4

A method for preparing an all-solid-state lithium battery is provided. This method is different from the embodiment 1 in that in the step (1), 310g of Li2S, 600g of P2S5, 70g of SiS2, and 20g of P2O5 are jointly placed in a mill tank. A suitable amount of ZrO2 mill beads is added. After high-energy ball milling at a rotational speed of 200rpm for 2h, the materials are transferred to an electric furnace to be heated up to 300°C at a heat-up temperature no lower than 10°C/min and are maintained at the temperature for 30min to obtain a glassy solid electrolyte. 90g of glassy solid electrolyte, 910g of Li2.3Si and 50g of Li1.71Si are directly mixed with 30g of binder SBR rubber and 1500mL of toluene solution to obtain a negative electrode paste. The rest steps are the same.

### Comparative Example 5

A method for preparing an all-solid-state lithium battery is provided. This method is different from the embodiment 1 in that once the core is obtained in the step (1), it is directly used to coat the negative electrode plate, without cladding with the amorphous Li_{1.71}Si as the shell. The rest steps are the same.

### Performance test

Test is performed on the cycle life of the all-solid-state lithium batteries obtained by the embodiments 1-3 and the comparative examples 1-5 with the following testing method. 20 samples are taken for each of the all-solid-state lithium batteries obtained by the embodiments and the comparative examples. Charge and discharge cycle test is performed on the batteries with a rate of 0.1C in a LAND CT 2001C secondary battery performance testing device in the condition of 298±1K.

The testing steps are as follows. The battery is allowed to stand for 10min; charged at a constant voltage till 4.25V/0.05C; allowed to stand for 10min; and discharged at a constant current up to 3V, thus completing one cycle. Then the discharge capacity for the first cycle is recorded (with TiS2 as the positive electrode, the upper and lower limits of the voltage being 3V/0.05C and 1V respectively, the rest conditions being the same). The cycling steps described above are repeated, so that when the capacity of the battery is lower than 80% of the first discharge capacity during cycling, the cycling ends, and the number of cycles at the end of cycling is the cycle life of the battery. An average is taken for each group and the results are shown in Table 1.

**Table 1 Table of cycle-life test data for the sample groups**

| | Embodiment 1 | Embodiment 2 | Embodiment 3 | Comparative Example 1 | Comparative Example 2 | Comparative Example 3 | Comparative Example 4 | Comparative Example 5 |
|---|---|---|---|---|---|---|---|---|
| Specific capacity of the first discharge (mAh g-1, calculated according to the total mass of the negative electrode) | 870 | 875 | 525 | 5 | 450 | 520 | 500 | 480 |
| Number of cycles | 68 | 72 | 38 | 0 | 13 | 20 | 18 | 20 |

As can be seen from Table 1, the discharge capacity and cycle life for the comparative example 1 are both very poor, and the discharge capacity and cycle life for the comparative examples 2-4 are significantly lower than the embodiments 1-3. The comparative example 1 adopting a silicon negative electrode material cladded with carbon that is conventionally used in a lithium battery with electrolytic solution has very poor battery performance, indicating that this negative electrode material is no suitable for the all-solid-state lithium battery. However, when this silicon negative electrode material cladded with carbon is mixed with the solid electrolyte (the comparative example 2), the fabricated battery has a performance that is somehow improved compared with the comparative example 1, but is still far lower than the all-solid-state lithium battery fabricated from the negative electrode material according to the embodiments 1-3 of the present disclosure. The battery fabricated from the negative electrode material prepared by direct mixture without preparing the core or cladding (the comparative example 4), although with its discharge capacity somehow increased, still has an undesirable cycling performance. The battery fabricated from the negative electrode material formed directly by the core (the comparative example 5) has a cycling performance slightly increased but a discharge capacity slightly reduced compared with the comparative example 4. The battery fabricated from the negative electrode material formed directly by the core without cladding (the comparative example 3) has a discharge capacity and a cycling performance slightly increased compared with the comparative example 4 but merely to a small extent and its performance is far lower than the performance of the all-solid-state lithium battery fabricated from the negative electrode material according to the embodiments 1-3 of the present disclosure. These results indicate that the all-solid-state lithium battery fabricated from the negative electrode material of the present disclosure has higher discharge specific capacity of the negative electrode and better cycle life of the battery, which facilitates its widespread application.

The embodiments of the present disclosure have been described above with reference to the accompanying drawings, but the present disclosure is not limited to the specific implementations described above, which are only illustrative and not limiting. In the light of the present disclosure, one of ordinary skill in the art can make many forms without departing from the gist of the present disclosure and the scope protected by the claims, and these forms shall all fall within the protection of the present disclosure.

## Claims

1. A negative electrode material comprising a core and an amorphous lithium-silicon alloy layer cladding the core, the core comprising a glassy solid electrolyte and amorphous lithium-silicon alloy particles dispersed in the glassy solid electrolyte, the material of the amorphous lithium-silicon alloy particles is LiₓSi, 0<x≤4.4, and the material of the amorphous lithium-silicon alloy layer is Li_{y}Si, 0<y≤4.4.

2. The negative electrode material according to claim 1, wherein the mass ratio of the amorphous lithium-silicon alloy particles to the amorphous lithium-silicon alloy layer is (1-100): 1.

3. The negative electrode material according to claim 1 or 2, wherein the mass fraction of the amorphous lithium-silicon alloy particles in the core is 50%-95%.

4. The negative electrode material according to any one of claims 1 to 3, wherein a particle size of the amorphous lithium-silicon alloy particles is 10 nm-1 µm; a thickness of the amorphous lithium-silicon alloy layer is 5 nm-1 µm; and a particle size of the negative electrode material is 20 nm-20 µm.

5. The negative electrode material according to any one of claims 1-4, wherein the glassy solid electrolyte includes at least one of glassy oxide solid electrolyte and glassy sulfide solid electrolyte.

6. The negative electrode material according to any one of claims 1 to 5, wherein the glassy solid electrolyte comprises in mole percent:
30mol%-80mol% of Li₂S, 10mol%-50mol% of P₂S₅, 0mol%-30mol% of SiS₂ and 0mol%-30mol% of LiA; or
30mol%-80mol% of Li₂O, 10mol%-50mol% of P₂O₅, 0mol%-30mol% of SiS₂ and 0mol%-30mol% of LiA; or
30mol%-80mol% of Li₂O, 20mol%-60mol% of B₂O₃ and 0mol%-30mol% of LiA; or
30mol%-80mol% of Li₂S, 20mol%-60mol% of SiS₂ and 0mol%-30mol% of LiA; or
30mol%-85mol% of Li₂O and 15mol%-70mol% of LiA; A is at least one of Cl, Br and I.

7. A method for preparing a negative electrode material, comprising:
dispersing amorphous LiₓSi particles in a glassy solid electrolyte to obtain a core, 0<x≤4.4;
cladding the core with amorphous Li_{y}Si to obtain the negative electrode material, 0<y≤4.4.

8. The method according to claim 7, wherein the cladding the core with amorphous Li_{y}Si comprises:
ball-milling Li_{y}Si to obtain the amorphous Li_{y}Si; and
mixing and ball-milling the core and the amorphous Li_{y}Si so that the core is cladded with the amorphous Li_{y}Si.

9. An all-solid-state lithium battery, comprising a positive electrode, a negative electrode and a solid electrolyte layer positioned between the positive electrode and the negative electrode, the negative electrode comprising the negative electrode material according to any one of claims 1 to 6 or the negative electrode material prepared by the method according to any one of claims 7 to 8.

10. The all-solid-state lithium battery according to claim 9, wherein the negative electrode comprises a negative electrode current collector and a negative electrode material layer provided over the negative electrode current collector, the negative electrode material layer comprises the negative electrode material, and the negative electrode material layer contains no conductive agent.
